# EUROPÄISCHE PATENTSCHRIFT

(11) **EP 1 986 978 B1**
(45) Veröffentlichungstag und Bekanntmachung des Hinweises auf die Patenterteilung: **21.09.2011**
(21) Anmeldenummer: 07704390.9
(22) Anmeldetag: 06.02.2007
(51) Int. Cl.: C04B 35/043, C04B 35/06, C04B 35/66

(54) **GROBKERAMISCHER FEUERFESTER VERSATZ SOWIE FEUERFESTES ERZEUGNIS DARAUS**
FIRE-RESISTANT ORDINARY CERAMIC BATCH, AND FIRE-RESISTANT PRODUCT THEREFROM
COMPOSITION RÉFRACTAIRE EN CÉRAMIQUE INDUSTRIELLE, ET PRODUIT RÉFRACTAIRE OBTENU À PARTIR DE CETTE COMPOSITION

(30) Priorität: 20.02.2006 DE 102006007781
(43) Veröffentlichungstag der Anmeldung: 05.11.2008
(73) Patentinhaber: Refratechnik Holding GmbH, 85737 Ismaning (DE)
(72) Erfinder: KLISCHAT, Hans-Jürgen, 37073 Göttingen (DE); VELLMER, Carsten, 37083 Göttingen (DE); WIRSING, Holger, 37083 Göttingen (DE)
(74) Vertreter: Solf, Alexander
(86) Internationale Anmeldenummer: PCT/EP2007/051118
(87) Internationale Veröffentlichungsnummer: WO 2007/096246

(56) Entgegenhaltungen:
- WO-A-2005/001359
- WO-A-2005/085155
- WO-A-2006/027140
- GB-A- 487 213
- GB-A- 2 042 499
- US-A- 2 026 088

## Beschreibung

Die Erfindung betrifft einen grobkeramischen feuerfesten Versatz überwiegend aufweisend mindestens eine körnige feuerfeste mineralische basische Hauptkomponente (im folgenden auch Resistor genannt) aus einem basischen feuerfesten Werkstoff basierend auf dem basischen feuerfesten Grundstoff MgO oder MgO und CaO und mindestens einen körnigen feuerfesten mineralischen elastifizierenden Zusatzstoff (im folgenden auch Elastifizierer genannt). Die Erfindung betrifft zudem die Verwendung des Versatzes.

Ein grobkeramischer feuerfester Versatz ist ein Gemenge, aus dem grobkeramische feuerfeste Erzeugnisse, z. B. ein Formkörper, ungebrannt oder gebrannt, oder monolithische feuerfeste Auskleidungen von z. B. Industrieöfen oder metallurgischen Gefäßen erstellt werden können.

Körnig meint auf dem Sachgebiet ein relativ weites Kornband z. B. einer Hauptkomponente oder eines Elastifizierers aus einem Grobkornanteil mit Körnern < 15 mm, z. B. zwischen 1 und 8 mm in Mengen von z. B. 20 bis 50 Gew.-%, einem Mittelkornanteil, z. B. zwischen 0,25 und 1 mm in Mengen von z. B. 10 bis 30 Gew.-%, und einem Feinkornanteil, z. B. < 0,25 mm in Mengen von z. B. 20 bis 60 Gew.-%.

Eine feuerfeste Hauptkomponente ist das Material des Versatzes, das in einer überwiegenden Menge im Versatz enthalten ist, die ausreicht, die gewünschten feuerfesten Eigenschaften eines aus dem Versatz hergestellten Erzeugnisses zu gewährleisten. In der Regel enthält demgemäß ein feuerfester Versatz über 60 Gew.-% der Hauptkomponente.

Die Hauptkomponente besteht aus zumindest einem feuerfesten Grundstoff und/oder zumindest einem feuerfesten, auf einem feuerfesten Grundstoff basierenden Werkstoff, wobei ein Werkstoff hauptsächlich eine Verbindung eines Grundstoffs mit anderen Grundstoffen ist (Gerald Routschka, Taschenbuch "Feuerfeste Werkstoffe", 3. Aufl., Vulkan-Verlag, Essen, S. 1 - 10).

Elastifizierer sind körnige feuerfeste, mineralische, meist auf Verbindungen der Grundstoffe basierende Werkstoffe, die im Versatz in der Regel in Mengen von 3 bis 30 Gew.-% bezogen auf die Summe aus Elastifizierer und Hauptkomponente enthalten sind. Sie bewirken in der Regel eine sogenannte Mikrorissbildung in der Matrix bzw. im Gefüge eines aus dem Versatz gebildeten feuerfesten Erzeugnisses, z. B. eines Formkörpers oder einer monolithischen Auskleidung, zum Teil auch nach einer oberflächlichen Reaktion zwischen dem Material der Hauptkomponente und dem Material des Elastifizierers bei hohen Temperaturen und anschließender Abkühlung aufgrund unterschiedlicher Ausdehnungskoeffizienten. Diese Elastifizierung verringert den Elastizitätsmodul (E-Modul) und Schubmodul (G-Modul) und somit die Sprödigkeit der keramischen Erzeugnisse und erhöht die Temperaturwechselbeständigkeit bzw. die Temperaturschockbeständigkeit.

Für basische Hauptkomponenten wie Magnesia oder Magnesiadoloma oder Doloma werden Elastifizierer verwendet, deren temperaturbedingter Ausdehnungskoeffizient erheblich über oder unter dem der Hauptkomponente liegt. Beispielsweise werden als Elastifizierer Chromerze, Spinelle vom Hercynit-Typ, Zirkonoxide, Pleonast, MA-Spinelle, Calciumhexa-Aluminat (CA₆) und Smirgel verwendet (DE 35 27 789 A1, DE 102 59 826 B4, DE 101 17 026 B4, DE 101 17 028 B4).

Grundsätzlich verringern die Elastifizierer oder die Reaktionsphasen zwischen Elastifizierer und Hauptkomponente die chemische Beständigkeit, insbesondere die Resistenz der feuerfesten Erzeugnisse gegen mineralische Schmelzphasen, die in den Industrieöfen oder metallurgischen Gefäßen auf sie einwirken. Außerdem kann eine gegebenenfalls geforderte gezielte Absenkung des E- oder G-Moduls auf vorbestimmte gewünschte Werte lediglich über die Zusatzmenge des Elastifizierers und dann auch nur grob gesteuert werden, weil die Mikrorissbildung im Gefüge gleichmäßig verteilt und eng benachbart vorhanden sein muss und dies nur durch entsprechend ausreichende Zusatzmengen des Elastifizierers gewährleistbar ist.

Insbesondere besteht ein Bedarf an basischen feuerfesten Versätzen, aus denen feuerfeste Erzeugnisse hergestellt werden können bzw. sich in situ feuerfeste Minerale bilden, die eine bessere Resistenz gegen in Zementdrehrohröfen oder Kalkbrennöfen, z. B. in Kalkschachtöfen, auftretende, aus dem Brenngut, z. B. dem Zementklinkerrohmaterial, stammende silikatische Schmelzphasen aufweisen und insbesondere in Teilen der Drehrohröfen zudem eine dauerhafte gewünschte Ansatzbildung auf der feuerfesten Auskleidung gewährleisten. Außerdem sollen die feuerfesten Auskleidungen eine gute Temperaturwechselbeständigkeit bzw. Temperaturschockbeständigkeit haben. Diese Probleme werden z. B. in der WO 2004079284 A1, insbesondere Seite 1 bis 3, Abs. 2, beschrieben, deren Offenbarungsgehalt insoweit vorliegend als eingefügter Bestandteil der Offenbarung gelten soll.

Die erwünschten Eigenschaften bezüglich der Elastifizierung und Ansatzbildung können auch nicht die in der WO 2005085155 A1 beschriebenen feuerfesten Erzeugnisse befriedigend gewährleisten, die mit SiO₂-Trägern elastifiziert sind und bei denen bereits im Verlauf erster Temperaturerhöhungen bei relativ niedrigen Temperaturen auftretende SiO₂-Volumensprünge Mikrorisse entstehen sollen; denn diese vorzeitige Mikrorissbildung ist kaum steuerbar und die Mikrorisse können bei hohen Temperaturen durch mineralbildende Reaktionen wieder ausheilen, so dass ihre erwünschte Wirkung wieder verloren geht.

Die WO2005/08515 A1 beschreibt einen keramischen Versatz für feuerfeste Anwendungen, der Spinell ausdrücklich einschließt. Ein elastifizierender Zusatzstoff in Form eines Forsteritwerkstoffs oder Forsteritwerkstoff bildenden Gemenges wird nicht erwähnt. Eine Bildung von Forsterit wird auch nicht angestrebt, denn es soll der zum refraktären Grundstoff zugegebene SiO₂-Träger als eigenständige Komponente erhalten bleiben.

Die DE 1 162 256 C beschreibt ein Verfahren zur Herstellung eines feuerfesten Bindemittels durch Umsetzung von SiO₂ und MgO zu gut kristallisiertem Forsterit. In diese kristallisierte keramische Bindung werden nicht saure feuerfeste Körner eingebunden gelagert. Die keramische Bindung besteht in der Hauptsache aus Forsterit. Sie kann aber auch zusätzlich Magnesiumoxid oder Periklas enthalten.

GB 487 213 A beschreibt ein Magnesia-Feuerfesterzeugnis, das körnigen Periklas aufweist, der mit Forsterit beschichtet ist. Die Herstellung erfolgt, indem die Periklaskörner mit SiO₂-Mehl gemischt werden, aus dem Gemisch Steine geformt und die Steine gebrannt werden. Dabei bildet sich auf der Oberfläche der Periklaskörner eine Forsteritschicht.

Aufgabe der Erfindung ist, einen grobkeramischen, basischen, feuerfesten Versatz zu entwickeln, der einen elastifizierenden Zusatzstoff enthält und eine hohe Resistenz gegen insbesondere silikatische Schmelzphasen gewährleisten und eine gute Ansatzbildung ohne schädigende Wirkung auf die Elastifizierung gewährleisten sowie vorzugsweise auch eine Steuerung der Höhe der Elastifizierung ermöglicht.

Diese Aufgabe wird insbesondere durch die Merkmale der Ansprüche 1 und 18 gelöst. Vorteilhafte Ausführungsformen der Erfindung sind in den Unteransprüchen gekennzeichnet.

Im Rahmen der Erfindung wurden aus der Vielzahl von basischen feuerfesten Werkstoffen (siehe Routschka, S. 144 bis 147) die auf den basischen Grundstoffen MgO und CaO basierenden folgenden Werkstoffe als Hauptkomponenten ausgewählt:

| **Werkstoff** | **Chemische Zusammensetzung** |
|---|---|
| Magnesia | 85 - 99 Gew.-% MgO |
| Magnesiadoloma | 42 - 88 Gew.-% MgO |
| | 10 - 50 Gew.-% CaO |
| Doloma | 35 - 42 Gew.-% MgO |
| | 50 - 62 Gew.-% CaO |

Diese Werkstoffe können nebengeordnete, aus Rohstoffen stammende Verunreinigungen bis 15 Gew.-%, z. B. Calciumverbindungen bis in der Regel 5 Gew.-% in Verbindungen mit Al₂O₃, Fe₂O₃ und/oder SiO₂ aufweisen.

Im Zusammenwirken mit diesen basischen Hauptkomponenten elastifizieren in überraschender Weise an sich bekannte, bisher als Hauptkomponenten in feuerfesten Versätzen oder feuerfesten Erzeugnissen dienende basische, feuerfeste MgO-basierte Forsterit-Werkstoffe (Routschka S. 204 - 206), die aus dem Mineral Forsterit (Formelschreibweise der Mineralphase: Mg₂SiO₄; Oxidformel: 2 MgO - SiO₂; Kurzformel: M₂S) bestehen oder dieses Mineral überwiegend enthalten. Es handelt sich bei letzteren um Forsteritmaterialien, die nach Art einer Dotierung CaO in fester Lösung im Kristallgitter des Forsterits enthalten können und mit einer Oxidformel 2(Mg, Ca)O · SiO₂ erfasst werden, oder die MgO oder SiO₂ in fester Lösung im Kristallgitter des Forsterits aufweisen, oder Forsteritmaterialien sind, bei denen sowohl CaO und MgO als auch CaO und SiO₂ in fester Lösung im Kristallgitter des Forsterits vorhanden sind.

Es handelt sich bei den Forsteritmaterialien auch um überwiegend Forsterit enthaltende Materialien, die nach Art einer Dotierung FeO und/oder Fe₂O₃ in fester Lösung im Kristallgitter des Forsterits enthalten und mit einer Oxidformel 2 (Mg, Fe)O · SiO₂ erfasst werden können, oder die MgO oder SiO₂ in fester Lösung im Kristallgitter des Forsterits aufweisen, oder Forsteritmaterialien sind, bei denen sowohl FeO und/oder Fe₂O₃ und MgO als auch FeO und/oder Fe₂O₃ und SiO₂ in fester Lösung im Kristallgitter des Forsterits vorhanden sind.

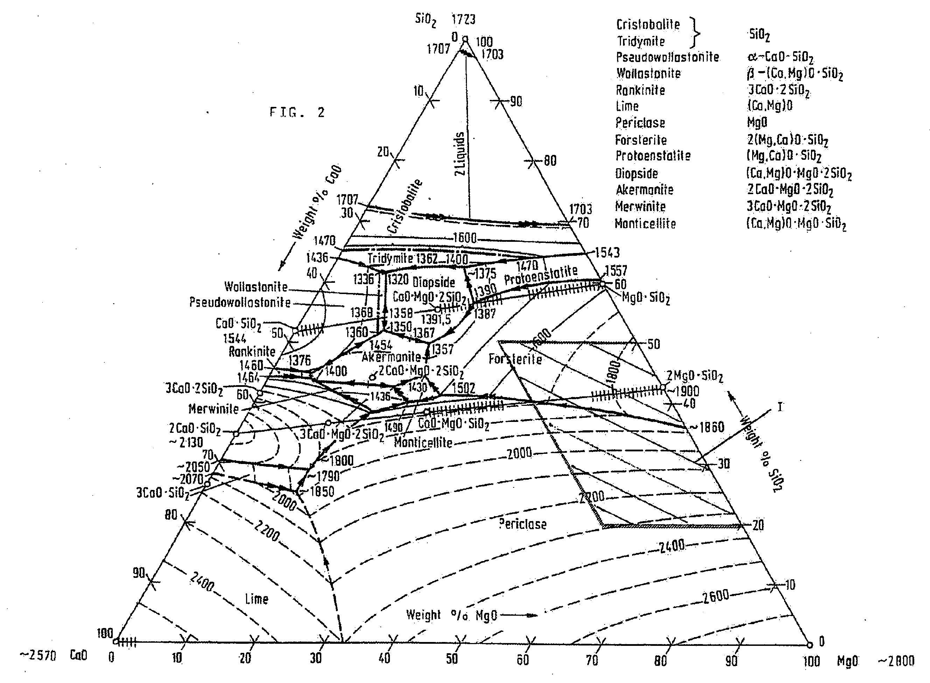

In Fig. 2, die das Dreistoffsystem CaO-MgO-SiO₂ mit Gew.-% darstellt, ist das Feld I der erfindungsgemäß verwendeten Forsterit-Elastifizierer schraffiert eingezeichnet. Demnach können im Forsteritmaterial, das 50 bis 80 Gew.-% MgO sowie 20 bis 50 Gew.-% SiO₂ enthalten kann, 0 bis 20 Gew.-% CaO enthalten sein, wobei im Rahmen der Erfindung eine optimale Kombination bezüglich Elastifizierung und Ansatzbildung erzielt wird, wenn der CaO-Gehalt nicht über 5 Gew.-% und der MgO-Gehalt nicht über 25 Gew.-% sowie der SiO₂-Gehalt nicht über 7 Gew.-% über das stöchiometrische Gewichtsverhältnis des Forsterits M₂S bzw. 2 MgO · SiO₂ hinausgehen. Das dieses erfindungsgemäß ausgewählte Forsteritmaterial darstellende Feld ist in Fig 2 durch eine Schrägschraffur innerhalb des Forsterit- und Periklasfeldes markiert.

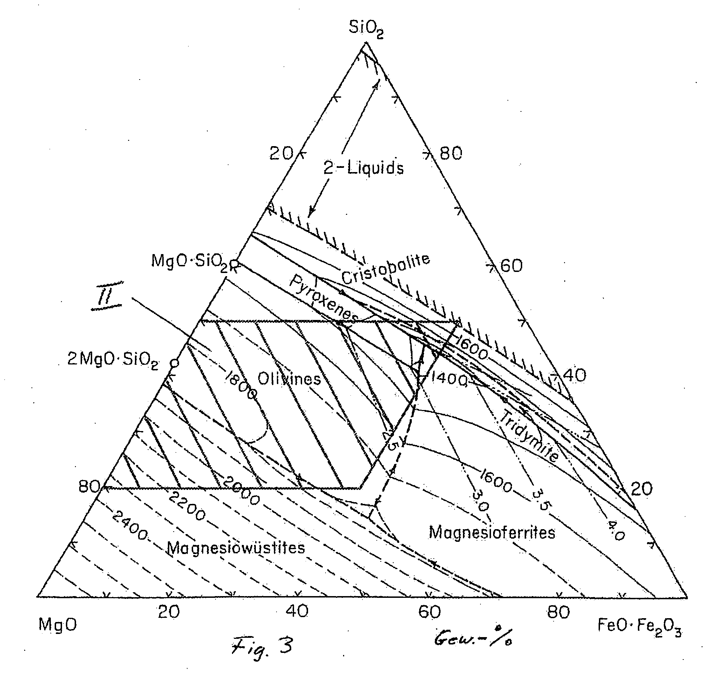

In Fig. 3, die das Dreistoffsystem SiO₂ FeO, Fe₂O₃ - MgO mit Gew.-% - zeigt, ist das Feld II der eisenhaltigen Forsterit-Elastifizierer schraffiert eingezeichnet. Somit kann das Forsteritmaterial Olivin enthalten. Außerdem können im Forsteritmaterial, das 50 bis 80 Gew.-% MgO sowie 20 bis 50 Gew.-% SiO₂ enthalten kann, 0 bis 40 Gew.-% FeO/Fe₂O₃ enthalten sein. Insbesondere ist vorteilhaft, wenn der FeO/ Fe₂O₃-Gehalt nicht über 15 Ges.-% und der MgO-Gehalt nicht über 25 Gew.-% sowie der SiO₂-Gehalt nicht über 7 Gew.-% über das stöchiometrische Gewichtsverhältnis des Forsterits M₂S bzw. 2 MgO · SiO₂ hinausgehen. Das dieses erfindungsgemäß ausgewählte Forsteritmaterial darstellende Feld ist in Fig. 3 durch eine Schraffur innerhalb des Olivin- und Magnesiowüstitfeldes markiert.

Die elastifizierende als auch ansatzbildende Wirkung des Forsterits im Zusammenwirken mit basischem Resistormaterial war bisher unbekannt. Bekannt sind lediglich feuerfeste Forsteritversätze oder -erzeugnisse, die als Hauptkomponente Forsterit aufweisen und gegebenenfalls mit Magnesia zur Bindung von Eisenoxid versetzt und/oder mit Chromerz in der üblichen Weise elastifiziert sind.

Bekannt sind auch feuerfeste Produkte, die als körnige Hauptkomponente MgO enthalten und als Bindemittel Forsteritmaterial in der feinkörnigen Matrix aufweisen. Der kristalline Forsterit gewährleistet die Bindung zwischen den MgO-Körnern in Form eines Netzwerkes, das in einem glasartigen Verbundmaterial ausgebildet ist. Als Forsteritmaterial kann auch das natürliche Mineral Olivin verwendet werden (US 2 026 088 A). Die feinkörnige Bindephase in der Matrix ist kein elastifizierendes Material. Ein Elastifizierer stellt keine derartigen Bindungen zur Verfügung; er wirkt vielmehr als separate nebengeordnete Komponente aufgrund unterschiedlicher Ausdehnungskoeffizienten.

Nach einer besonderen Ausführungsform der Erfindung wird ein Forsteritmineral und/oder Forsteritmaterial als elastifizierender und ansatzbildender Zusatzstoff verwendet, der in seiner Forsteritmatrix verteilt Periklaskörner eingeschlossen aufweist, die Korngrößen zwischen 30 und 900, vorzugsweise zwischen 50 und 200 µm aufweisen und in Mengen bis 25, insbesondere von 3 bis 15 Gew.-% vorhanden sind. Überraschend ist, dass der E- und G-Modul eines gebrannten Erzeugnisses mit der Menge dieser in der Forsterit-bzw. Forsteritmaterial-Matrix eingeschlossenen bzw. von der Matrix umgebenen Periklaspartikel gesteuert werden kann, wobei ein relativ hoher Modul mit relativ großen eingeschlossenen Mengen und ein relativ kleiner Modul mit relativ kleinen eingeschlossenen Mengen eingestellt werden kann. Dies ergibt sich z. B. aus der folgenden Tabelle 1. Das Forsteritmaterial wurde aus den Rohstoffen Magnesia und SiO₂-Mehl, z. B. Silica- oder Cristobalit- oder Tridymitmehl oder Mischungen daraus, Quarzmehl, synthetisiert, z. B. erschmolzen, und als Elastifizierer einem die Hauptkomponente bildenden Magnesiasinter mit 98 Gew.-% MgO jeweils in einer Menge von 15 Gew.-% beigemengt. Die Versätze mit jeweils 15 Gew.-% Elastifizierer sowie der Magnesiaversatz ohne Elastifizierer wurden bei 1600°C keramisch gebrannt und anschließend analysiert.

**Tabelle 1**

| Magnesia (Gew.-%) | Forsterit-material (Gew-%) | MgO-Einschlüsse (Gew.-%) | E-Modul (GPa) | G-Modul (GPa) |
|---|---|---|---|---|
| 95 | 15 | 0 | 22 | 9 |
| 95 | 15 | 4 | 23 | 11 |
| 95 | 15 | 6 | 27 | 13 |
| 95 | 15 | 12 | 40 | 19 |
| 100 | 0 | 0 | 110 | 40 |

Aus Tabelle 1 ergibt sich, dass ein erfindungsgemäßer Versatz durch Vorhalten von Forsteritzusatzstoff mit unterschiedlichen Mengen an Periklaskörnern innerhalb der Matrix und Einbringen insoweit unterschiedlichen Forsteritzusatzstoffes in Versätze auf einfache Weise unterschiedliche E- und G-Moduli eingestellt werden können, indem die Mengen des Forsterit-Elastifizierers und insbesondere z. B. auch der Kornaufbau jeweils unverändert bleiben und lediglich der Typ des Forsterit-Elastifizierers bezüglich des Periklaskörnergehalts ausgetauscht wird.

Periklas- bzw. MgO-Einschlüsse sind sowohl in Elastifizierern aus Forsteritmineral als auch aus Forsteritmaterial, das CaO oder FeO/Fe₂O₃ enthalten kann, durch entsprechende keramische Verfahren, die der Fachmann kennt, herstellbar.

Die Beeinflussung der E- und G-Moduli durch Erhöhung der Periklasgehalte geht einher mit einer Erhöhung der Resistenz der Erzeugnisse gegen Schmelzphasenangriffe, z. B. beim Brennen von Zement in einem Drehrohrofen oder einem CaO-Angriff in einem Kalkschachtofen. Je höher der Periklaskörnergehalt in der Elastifizierermatrix ist, desto höher ist auch die Resistenz des feuerfesten Versatzes oder des feuerfesten Erzeugnisses gegen Schlacken- bzw. Schmelzphasenangriffe. Insofern ergibt sich aus der Erfindung eine Möglichkeit der Optimierung gewünschter Eigenschaften bezüglich Elastizität und Resistenz.

Selbstverständlich ist es auch möglich, diese unterschiedlichen Forsterit-Elastifizierer abzumischen, um zu Zusätzen zu gelangen, die Zwischenwerte bezüglich des Periklaskörnergehalts zwischen den vorgehaltenen Elastifizierern ergeben. Vorteilhaft ist dabei, dass der Elastifizierer jeweils mit unveränderter Kornfraktion und unveränderter Menge verwendet werden kann, so dass der feuerfeste Versatz einschließlich der Hauptkomponente bezüglich des gesamten Kornaufbaus unverändert bleiben kann.

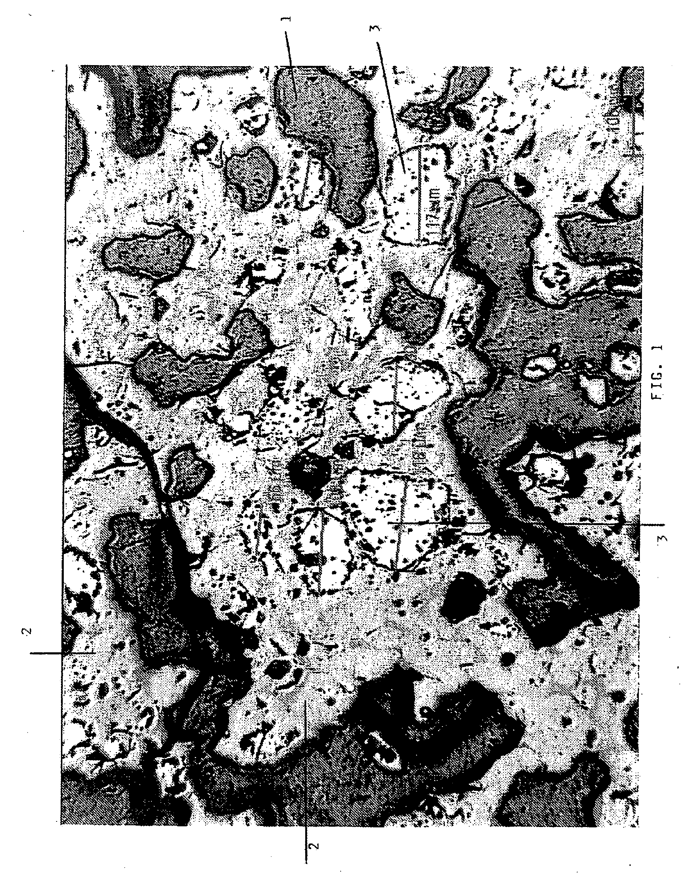

Fig. 1 zeigt die Forsteritkornmatrix als Anschliff in einer lichtmikroskopischen Aufnahme. Der Maßstab ist unten rechts innerhalb des Bildes mit 100 µm angegeben. Die dunklen Felder 1 sind Poren. Die hellen Felder zeigen die Matrix des Forsteritmaterials 2. In der Matrix sind wehr oder weniger abgegrenzte Periklasfelder 3 eingeschlossen, die bis zu 200 µm Durchmesser aufweisen können. Zur Herstellung des Forsteritmaterials wurde eine Mischung aus Quarzmehl und Sintermagnesiamehl im Verhältnis M₂S mit 5 Gew.-% MgO-Überschuss bei 1630° C gesintert, anschließend abgekühlt und das Produkt gebrochen.

Die Hauptkomponenten und die Elastifizierer erfindungsgemäßer Versätze werden mit jeweils üblichen Kornbändern, z. B. wie oben angegeben, und üblichen Kornverteilungen verwendet und z. B. Versätze gebildet, die bezüglich der Körnung typischen Fuller-Kurven entsprechen.

Zur Herstellung von feuerfesten elastifizierten Erzeugnissen können aus den Versätzen geformte Körper hergestellt und gegebenenfalls getempert und/oder keramisch gebrannt werden.

Des Weiteren können den Versätzen übliche Bindemittel, z. B. vor einer Formgebung, in üblichen Mengen zugegeben werden. Dies sind z. B. Zement, insbesondere Tonerdezement, Ligninsulfonate, Alkalisilikate, Phosphate, Sulfate, Pech, Kunstharze. Weiterhin ist ein Zusatz von metallischen und nichtmetallischen Zusatzstoffen, wie A1 oder SiC möglich, die gegebenenfalls als Antioxidantien wirken.

Darüber hinaus kann den Versätzen zweckmäßigerweise Kohlenstoff, z. B. Graphit in üblichen Mengen zugesetzt werden.

Die Bindemittel enthaltenden Versätze können zur Herstellung monolithischer Auskleidungen eingesetzt oder zu Formkörpern geformt werden. Die geformten Erzeugnisse können ungebrannt in Auskleidungen eingebaut werden, wobei die Elastifizierung durch die Temperatureinwirkung in situ erfolgt. Die geformten Erzeugnisse können aber auch getempert und/oder gebrannt und dabei elastifiziert und anschließend verbaut werden.

Nach der Erfindung enthält ein erfindungsgemäßer Versatz, bezogen auf die Summe von Elastifizierer und Hauptkomponente, vorzugsweise 3 bis 30 Gew.-%, insbesondere von 10 bis 20 Gew.-% des Forsterit-Elastifizierers in einer Körnung von z. B. bis 8, insbesondere von 1 bis 6 mm, gegebenenfalls bei üblicher Kornverteilung.

Eine Hauptkomponente eines erfindungsgemäßen Versatzes weist z. B. eine, Körnung bis 8, insbesondere von 1 bis 5 mm auf, ebenfalls gegebenenfalls mit üblicher Kornverteilung.

Der Forsterit-Elastifizierer wird vorsynthetisiert, indem eine feinpulvrige MgO-Komponente, z. B. Sintermagnesia oder Schmelzmagnesia oder kaustische Magnesia mit einem MgO-Gehalt von 90 bis 100, insbesondere von 93 bis 99 Gew.-%, mit einer feinpulvrigen SiO₂- oder SiO₂-haltigen Komponente, z. B. Quarzmehl, Speckstein oder Olivin mit einem SiO₂-Gehalt von 30 bis 100, insbesondere von 40 bis 99 Gew.-% im Molverhältnis M₂S oder mit gewünschtem MgO- oder SiO₂-Überschuss innig vermischt, anschließend das Gemisch bei Temperaturen zwischen 1600 und 2300 °C synthetisiert z. B. geschmolzen, abgekühlt und das erhaltene Produkt gebrochen wird.

Zur Herstellung der Elastifizierer mit MgO-Überschuss in Form von Periklaskörnern in der Forsteritmatrix wird die MgO-Komponente in entsprechender Überschussmenge zugegeben und der Brand bzw. das Schmelzen derart durchgeführt, dass die gewünschte Matrix gebildet wird. Die Herstellungsbedingungen sind rohstoffabhängig und können auf einfache Weise empirisch ermittelt werden.

Sofern und soweit auch CaO in bestimmten Mengen im Elastifizierer enthalten sein soll, wird dem Ausgangsgemisch eine feinteilige CaO-Komponente, z. B. gebrannter Kalk oder Kalkhydrat in entsprechender Feinheit und Menge beigemengt oder als Rohstoff Doloma verwendet.

Soll auch FeO und/oder Fe₂O₃ z. B, anstelle von CaO in bestimmten Mengen im Elastifizierer enthalten sein, wird dem Ausgangsgemisch eine feinteilige FeO und/oder Fe₂O₃-Komponente z. B. Magnetit oder Hämatit in entsprechender Feinheit beigegeben oder als Rohstoff Olivin verwendet.

Die Erfindung sieht entgegen bisheriger Vorgehensweise, bei der versucht wird, das Eindringen relativ niedrig schmelzender Schmelzphasen in die feuerfesten Produkte möglichst zu vermeiden vor, eine relativ reaktive Phase, nämlich Forsterit bzw. Forsteritmaterial, zu bilden, um eine Ansatzbildung in einem Industrieofen zu vereinfachen, gleichwohl aber die Feuerfestigkeit und Resistenz nicht wesentlich zu beeinträchtigen und zudem die Elastifizierung zu gewährleisten. Dies gelingt mit dem erfindungsgemäß verwendeten oder in situ generierten Forsterit bzw. Forsteritmaterial in überraschender Weise. Wahrscheinlich wird eine erste Schmelzphaseninfiltration im feuerfesten Produkt bei relativ niedrigen Temperaturen gestoppt und die Feuerfestigkeit und Resistenz offenbar wieder erhöht, wenn die Forsteritphase mit den primären Schmelzphasen, z. B. aus einem Brenngut, z. B. aus Zementklinkerschmelzphasen, in Kontakt kommt und sich neben einer zweiten Schmelzphase Magnesiumferrite und hochschmelzende kalziumsilikatische Phasen im feuerfesten Produkt bilden. Dadurch wird eine weitere Infiltration sehr wahrscheinlich verlangsamt oder sogar verhindert. Im Gegensatz dazu sind die Reaktionsprodukte bei bekannten Magnesiaspinellsteinen gering viskose Schmelzphasen, die die weitere Infiltration beschleunigen.

Besonders vorteilhaft bezüglich der kombinatorischen Wirkung des Elastifizierers bezüglich Elastifizierung, Ansatzbildung und Resistenz ist, das Forsteritmaterial in Form von Olivin zu verwenden. Olivin hat bekanntlich die chemische Formel (Mg,Fe)₂SiO₄ und weist in der Regel 48 - 50 Gew.-% MgO, 41 - 43 Gew.-% SiO₂ und 6,1 - 6,6 Gew.-% FeO auf. Darüber hinaus können jeweils unter 1 Gew.-% Cr₂O₃, Al₂O₃, NiO, MnO und/oder CaO enthalten sein. Olivin ist ein natürlich vorkommendes Mineral und ist ein Mischkristall, bestehend zu etwa 93 Gew.-% aus dem Mineral Forsterit Mg₂SiO₄ und zu etwa 6 Gew.-% aus dem Mineral Fayalit Fe₂SiO₄. Daneben können z. B. Periklas (MgO) in Mengen von 3 - 6 Gew.-% sowie Enstatit (MgSiO₃) < 5 Gew.-% und Serpentin, Talk und Chromit < 1 Gew.-% vorhanden sein. Olivin dient ungebrannt als feuerfester Werkstoff, z. B. als Hauptkomponente zur Herstellung von Forsteritsteinen oder als Schlackenkonditioniermittel im Hochofenprozeß.

Die Verwendung dieses natürlichen, relativ preiswerten Minerals Olivin hat den besonderen Vorteil, dass auch in diesem Fall kein vorsynthetisiertes Material erzeugt werden muss. Insbesondere fördert der Fayalit des Mischkristalls und dessen Umwandlungsprodukte eine Reaktion mit dem Brenngut an der Steinoberfläche und damit die Ansatzbildung und stabilisiert die Ansatzbeschichtung auf der Auskleidung dauerhaft. Darüber hinaus ergibt Olivin auch eine intensivere Elastifizierung durch eine höhere Erniedrigung der E- und G-Moduli bei gleicher Zusatzmenge im Vergleich zu vorsynthetisiertem Forsterit bzw. Forsteritmaterial und bei gleichen Kornfraktionen.

Vorteilhafte Versätze mit Olivin weisen folgende Zusammensetzungen auf:

| | | |
|---|---|---|
| MgO-Werkstoff | 70 bis 97, | insbesondere 80 bis 90 Gew.-% |
| Olivin | 3 bis 30, | insbesondere 10 bis 20 Gew.-% |

Die Kornfraktionen liegen dabei in den bereits angegebenen Bereichen für einen Versatz mit körnigem elastifizierendem Zusatzstoff.

Mit Olivin als Elastifizierer kann z. B. der E-Modul gebrannter Magnesiasteine von 110 GPa für reine Sintermagnesiasteine auf bis zu 20 GPa bei einer Zusatzmenge von 15 Gew.-% und der G-Modul von 40 auf 8 GPa erniedrigt werden.

Es liegt im Rahmen der Erfindung, körnigen vorsynthetisierten Forsterit bzw. körniges vorsynthetisiertes Forsteritmaterial mit Olivinkörnungen zur Herstellung einer Elastifizierer-Komponente zu vermischen und einer Hauptkomponente zuzusetzen, um die Ansatzbildungsfähigkeit und die Elastifizierung eines feuerfesten Erzeugnisses zu steuern bzw. zu beeinflussen, insbesondere bei unveränderten Zusatzmengen und unveränderten Kornfraktionen des Elastifizierers, so dass die Rezeptur eines erfindungsgemäßen Versatzes bezüglich der Kornfraktionen unverändert bleiben kann.

Eine Variante der Erfindung sieht vor, hauptsächlich eine elastifizierende, körnige Komponente mit der körnigen Hauptkomponente zu einem Versatz zu vermengen, die lediglich die Rohstoffe zur Bildung von Forsterit oder Forsteritmaterial in situ aufweist. Demgemäß weist ein erfindungsgemäßer. Versatz den Elastifizierer als geformte Körperchen, z. B. in Form von Pellets, oder aus Preßlingen zerkleinertes Granulat mit Korngrößen von 0,3 bis 8 mm auf. Die Formkörperchen oder Granulate bestehen im wesentlichen aus einem Gemenge der Mehle mindestens einer MgO- und mindestens einer SiO₂-Komponente, wobei auch CaO- oder FeO/Fe₂O₃-Komponenten in oben angegebenen Mengen vorhanden sein können, wobei das Gemenge zweckmäßigerweise ein Bindemittel wie Ligninsulfonat oder ein Phosphat oder Kunstharz oder Polyvinylalkohol aufweist. Zur Herstellung der Formkörperchen wird ein Gemenge pelletiert oder brikettiert. Zur Herstellung der Granulate werden großformatige Formkörper hergestellt und gehärtet, die anschließend zerkleinert werden.

Die Bildung der Forsteritphase in situ führt in besonders vorteilhafter Weise zu einer optimalen und dauerhaften Ansatzbildung, z. B. in der Sinterzone eines Zementdrehrohrofens, und zur gewünschten optimalen Elastifizierung des Auskleidungsmaterials sowie zu einer besonders hohen Resistenz gegen Schmelzphasen aus dem Brennprodukt im Brennaggregat, weshalb z. B. Einsätze solcher Materialien auch in statischen Kalkaggregaten zweckmäßig sind.

## Patentansprüche

1. Grobkeramischer feuerfester Versatz überwiegend aufweisend
a) mindestens eine körnigen, feuerfeste, mineralische, basische Hauptkomponente aus einem auf mindestens einem basischen feuerfesten Grundstoff basierenden MgO- oder MgO und CaO basierenden feuerfesten Werkstoff und
b) mindestens
einen körnigen, feuerfesten, mineralischen, MgObasierten, elastifizierenden Zusatzstoff
b1) in Form eines Forsteritwerkstoffs bestehend aus dem Mineral Forsterit oder dieses Mineral überwiegend enthaltend mit folgender Körnung:
1 - 6 mm 50 bis 100, insbesondere 70 bis 80 Gew.-%
0,25 - 1 mm 0 bis 50, insbesondere 20 bis 30 Gew.%
oder
b2) in Form von geformten Körperchen einer Körnung von 0,3 bis 8 mm, aus lediglich den Rohstoffen zur in situ-Bildung von Forsterit oder das Mineral Forsterit überwiegend enthaltendem Forsteritmaterial,
wobei die geformten Körperchen im Wesentlichen aus einem Gemenge der Mehle mindestens einer MgO- und mindestens einer SiO₂-Komponente bestehen,
wobei der Zusatzstoff in die Hauptkomponente elastifizierender Menge im Versatz enthalten ist.

2. Versatz nach Anspruch 1,
**dadurch gekennzeichnet, dass** die Hauptkomponente Magnesia, vorzugsweise Sinter- und/oder Schmelzinagnesia, insbesondere mit MgO-Gehalten zwischen 85 und 99 Gew.-%
und/oder
Magnesiadoloma, insbesondere mit MgO-Gehalten zwischen 42 und 88 Gew.-% und CaO-Gehalten zwischen 10 und 50 Gew.-%
und/oder
Doloma, insbesondere mit MgO-Gehalten zwischen 35 bis 42 Gew.-% und CaO-Gehalten zwischen 50 und 62 Gew.-% ist.

3. Versatz nach Anspruch 1 und/oder 2,
**dadurch gekennzeichnet, dass**
der elastifizierende Zusatzstoff aus dem Mineral Olivin und/oder dem Mineral Forsterit und/oder einem Forsteritmaterial besteht oder aus einem Gemenge besteht, das unter Temperatureinwirkung in situ Forsterit und/oder Forsteritmaterial bildet, wobei die Forsteritmaterialien das Mineral Forsterit überwiegend (über 50 Gew.-%) enthalten.

4. Versatz nach Anspruch 3,
**dadurch gekennzeichnet, dass**
das Gemenge oder das Forsteritmaterial
50 bis 80 insbesondere 60 bis 70 Gew.-% MgO
20 bis 50 insbesondere 30 bis 40 Gew.-% SiO₂
0 bis 20 insbesondere 1 bis 5 Gew.-% CaO enthält.

5. Versatz nach Anspruch 3 und/oder 4,
**dadurch gekennzeichnet, dass**
das Gemenge oder Forsteritmaterial, insbesondere in fester Lösung nicht über 5 Gew.-% CaO, nicht über 25 Gew.-% MgO und nicht über 7 Gew.-% SiO₂ über das stöchiometrische Gewichtsverhältnis des Forsterits hinausgehend enthält.

6. Versatz nach Anspruch 3,
**dadurch gekennzeichnet,**
**dass** das Gemenge oder Forsteritmaterial 50 bis 80, insbesondere 60 bis 70 Gew.-% MgO 20 bis 50, insbesondere 30 bis 40 Gew.-% SiO₂ 0 bis 40, insbesondere 1 bis 10 Gew.-% FeO und/oder Fe₂O₃ enthält.

7. Versatz nach Anspruch 3 und/oder 6,
**dadurch gekennzeichnet, dass**
das Gemenge oder Forsteritmaterial insbesondere in fester Lösung nicht über 15 Gew.-% FeO und/oder Fe₂O₃, nicht über 25 Gew.-% MgO und nicht über 7 Gew.-% SiO₂ über das stöchiometrische Gewichtsverhältnis des Forsterits hinausgehend enthält.

8. Versatz nach einem oder mehreren der Ansprüche 1 bis 7,
**dadurch gekennzeichnet, dass**
der Zusatzstoff Forsterit und/oder Forsteritmaterial in der Matrix verteilt Periklaskörner eingeschlossen aufweist, die insbesondere Korngrößen zwischen 30 und 900, vorzugsweise zwischen 50 und 200 µm, insbesondere in Mengen bis 25, vorzugsweise von 3 bis 15 Gew.-% aufweisen.

9. Versatz nach einem oder mehreren der Ansprüche 1 bis 8,
**dadurch gekennzeichnet, dass** der elastifizierende Zusatzstoff in Mengen von 3 bis 30, insbesondere von 10 bis 20 Gew.-%, bezogen auf die Summe Elastifizierer plus Hauptkomponente vorliegt.

10. Versatz nach einem oder mehreren der Ansprüche 1 bis 9,
**dadurch gekennzeichnet, dass**
die Hauptkomponente mit folgender Körnung, vorzugsweise in Kombination mit der Körnung des Zusatzstoffes in einer Körnung einer typischen Fullerkurve vorliegt:
1 - 8 mm 20 bis 50, insbesondere 45 bis 50 Gew.%
0,25 - 1 mm 10 bis 30, insbesondere 15 bis 20 Gew.%,
< 0,25 mm 20 bis 60, insbesondere 25 bis 30 Gew.-%.

11. Versatz nach einem oder mehreren der Ansprüche 1 bis 10,
**dadurch gekennzeichnet, dass**
die geformten Körperchen Pellets oder Briketts sind oder aus aus Presslingen zerkleinertem Granulat bestehen.

12. Versatz nach Anspruch 11,
**dadurch gekennzeichnet, dass**
das Gemenge ein Bindemittel aufweist.

13. Versatz nach einem oder mehreren der Ansprüche 1 bis 12,
**dadurch gekennzeichnet, dass**
der Versatz ein übliches Bindemittel in üblichen Mengen wie Zement, insbesondere Tonerdezement, Ligninsulfonat, Alkalisilikat, Phosphat oder Sulfat enthält.

14. Versatz nach einem oder mehreren der Ansprüche 1 bis - 12,
**dadurch gekennzeichnet, dass** der Versatz als Bindemittel Pech, vorzugsweise in Mengen von 2 bis 5 Gew.-% oder Kunstharz, vorzugsweise in Mengen von 3 bis 4 Gew.-% enthält.

15. Versatz nach einem oder mehreren der Ansprüche 1 bis 14,
**dadurch gekennzeichnet, dass**
der Versatz Kohlenstoff, insbesondere in Form von Graphit, insbesondere in Mengen von 2 bis 20 Gew.-% enthält.

16. Versatz nach einem oder mehreren der Ansprüche 1 bis 15,
**dadurch gekennzeichnet, dass**
der Versatz einen elastifizierenden Zusatzstoff enthält, der hergestellt ist aus einer Mischung aus einer feinpulvrigen MgO-Komponente, z. B. Sintermagnesia oder Schmelzmagnesia oder kaustischer Magnesia mit einem MgO-Gehalt von 90 bis 100, insbesondere von 93 bis 99 Gew.-%, sowie einer feinpulvrigen SiO₂-Kompönente, z. B. Quarzmehl, Speckstein oder Olivin mit einem SiO₂-Gehalt von 30 bis 100, insbesondere von 40 bis 99 Gew.-%, im Molverhältnis M₂S oder mit gewünschtem MgO-Überschuss bezüglich M₂S, durch innige Vermischung und anschließendes keramisches Brennen des Gemisches bei Temperaturen zwischen 1600 und 2300°C, Abkühlen und Brechen des gebrannten Produkts.

17. Versatz nach Anspruch 16,
**dadurch gekennzeichnet, dass**
die Mischung, aus der der elastifizierende Zusatzstoff hergestellt ist, zusätzlich eine feinteilige CaO-Komponente wie gebrannten Kalk und/oder Kalkhydrat in Mengen bis 20 Gew.-% oder eine FeO und/oder Fe₂O₃-Komponente in Mengen bis 40 Gew.-% enthält.

18. Verwendung eines Versatzes nach einem oder mehreren der Ansprüche 1 bis 17,
**dadurch gekennzeichnet, dass**
ein feuerfestes Erzeugnis in Form eines gepressten und ggf. bei Temperaturen zwischen 80 und 800°C getemperten, großformatigen Formkörpers, z. B. in Form eines Bausteins hergestellt wird.

19. Verwendung nach Anspruch 18,
**dadurch gekennzeichnet, dass**
der Formkörper bei Temperaturen zwischen 800 und 1800, insbesondere zwischen 1400 und 1700°C gebrannt wird.

## Claims

1. A coarse ceramic refractory batch comprising predominantly
a) at least one granular, refractory, mineral, basic main component comprising an MgO- or MgO and CaO-based refractory material based on at least one basic refractory base material and
b) at least one granular, refractory, mineral, MgO-based elasticising additive
b1) in the form of a forsterite material consisting of the mineral forsterite or predominantly containing this material, having the following particle size distribution:
1 - 6 mm: 50 to 100, in particular 70 to 80 wt.%
0.25 - 1 mm: 0 to 50, in particular 20 to 30 wt.%
or
b2) in the form of small shaped bodies having a particle size of 0.3 to 8 mm comprising only the raw materials for *in-situ* formation of forsterite or forsterite material predominantly containing the mineral forsterite,
wherein the small shaped bodies substantially consist of a mixture of the powders of at least one MgO component and at least one SiO₂ component,
the additive being present in the batch in an amount which elasticises the main component.

2. The batch according to claim 1,
**characterised in that**
the main component is magnesia, preferably sintered and/or fused magnesia, in particular with MgO contents of between 85 and 99 wt.%,
and/or
magnesia-doloma, particularly with MgO contents of between 42 and 88 wt.% and CaO contents of between 10 and 50 wt.%
and/or
doloma, particularly with MgO contents of between 35 to 42 wt.% and CaO contents of between 50 and 62 wt.%.

3. The batch according to claim 1 and/or 2,
**characterised in that**
the elasticising additive consists of the mineral olivine and/or the mineral forsterite and/or a forsterite material or it consists of a mixture which forms forsterite and/or forsterite material *in situ* under the action of heat, with the forsterite materials containing the mineral forsterite predominantly (over 50 wt.%).

4. The batch according to claim 3,
**characterised in that**
the mixture or the forsterite material contains
50 to 80, in particular 60 to 70 wt.% MgO
20 to 50, in particular 30 to 40 wt.% SiO₂
0 to 20, in particular 1 to 5 wt.% CaO.

5. The batch according to claim 3 and/or 4,
**characterised in that**
the mixture or forsterite material contains, particularly in solid solution, no more than 5 wt.% of CaO, no more than 25 wt.% of MgO and no more than 7 wt.% of SiO₂ above the stoichiometric weight ratio of the forsterite.

6. The batch according to claim 3,
**characterised in that**
the mixture or forsterite material contains
50 to 80, in particular 60 to 70 wt.% MgO
20 to 50, in particular 30 to 40 wt.% SiO₂
0 to 40, in particular 1 to 10 wt.% FeO and/or Fe₂O₃.

7. The batch according to claim 3 and/or 6,
**characterised in that**
the mixture or forsterite material contains, particularly in solid solution, no more than 15 wt.% FeO and/or Fe₂O₃, no more than 25 wt.% MgO and no more than 7 wt.% SiO₂ above the stoichiometric weight ratio of the forsterite.

8. The batch according to one or more of claims 1 to 7,
**characterised in that**
the additive forsterite and/or forsterite material has included periclase grains distributed in the matrix having, in particular, grain sizes of between 30 and 900, preferably between 50 and 200 µm, in particular in amounts of up to 25, preferably from 3 to 15 wt.%.

9. The batch according to one or more of claims 1 to 8,
**characterised in that**
the elasticising additive is present in amounts of 3 to 30, in particular of 10 to 20 wt.%, based on the sum of elasticiser plus main component.

10. The batch according to one or more of claims 1 to 9,
**characterised in that**
the main component is present with the following particle size distribution, preferably in combination with the particle size distribution of the additive in a particle size distribution of a typical Fuller curve:
1 - 8 mm: 20 to 50, in particular 45 to 50 wt.%,
0.25 - 1 mm: 10 to 30, in particular 15 to 20 wt.%,
< 0.25 mm: 20 to 60, in particular 25 to 30 wt.%.

11. The batch according to one or more of claims 1 to 10,
**characterised in that**
the shaped small bodies are pellets or briquettes or consist of granular material derived from comminuted pressed compacts.

12. The batch according to claim 11,
**characterised in that**
the mixture contains a binder.

13. The batch according to one or more of claims 1 to 12,
**characterised in that**
the batch contains a conventional binder such as cement, in particular aluminous cement, lignosulfonate, alkali metal silicate, phosphate or sulfate in conventional amounts.

14. The batch according to one or more of claims 1 to 12,
**characterised in that**
the batch contains pitch, preferably in amounts of 2 to 5 wt.%, or synthetic resin, preferably in amounts of 3 to 4 wt.%, as binder.

15. The batch according to one or more of claims 1 to 14,
**characterised in that**
the batch contains carbon, in particular in the form of graphite, in particular in amounts of 2 to 20 wt.%.

16. The batch according to one or more of claims 1 to 15,
**characterised in that**
the batch contains an elasticising additive, which is produced from a mixture of a finely powdered MgO component, e.g. sintered magnesia or fused magnesia or caustic magnesia, having an MgO content of 90 to 100 wt.%, in particular from 93 to 99 wt.%, and a finely powdered SiO₂ component, e.g. quartz powder, soapstone or olivine, having an SiO₂ content of 30 to 100 wt.%, in particular from 40 to 99 wt.%, in the molar ratio M₂S or with a desired excess of MgO over M₂S, by intimate mixing and subsequent ceramic firing of the mixture at temperatures of between 1600 and 2300°C, cooling and crushing of the fired product.

17. The batch according to claim 16,
**characterised in that**
the mixture from which the elasticizing additive is produced additionally contains a finely divided CaO component, such as quicklime and/or hydrated lime, in amounts of up to 20 wt.% or an FeO and/or Fe₂O₃ component in amounts of up to 40 wt.%.

18. Use of a batch according to one or more of claims 1 to 17,
**characterised in that**
a refractory product in the form of a pressed large shaped body which has optionally been heat treated at temperatures of between 80 and 800°C is produced, e.g. in the form of a brick.

19. Use according to claim 18,
**characterised in that**
the shaped body is fired at temperatures of between 800 and 1800°C, in particular between 1400 and 1700°C.

## Revendications

1. Mélange céramique réfractaire grossier, comportant de façon prépondérante :
a) au moins un composant principal granulé réfractaire, minéral, basique en un matériau réfractaire à base de MgO ou de MgO et de CaO se basant sur au moins un produit de base réfractaire basique et
b) au moins un produit additif élastifiant granulé réfractaire minéral à base de MgO
b1) sous la forme d'un matériau de forstérite consistant en un minéral de forstérite ou contenant essentiellement ce minéral, avec la granulométrie suivante :
1 à 6 mm : 50 à 100, en particulier 70 à 80 % en poids
0,25 à 1 mm : 0 à 50, en particulier 20 à 30 % en poids,
ou
b2) sous la forme de corps moulés d'une granulométrie de 0,3 à 8 mm, seulement dans les matières premières pour la formation *in-situ* de forstérite ou dans un matériau de forstérite contenant essentiellement le minéral de forstérite,
dans lequel les corps moulés sont composés essentiellement d'une dispersion des poudres d'au moins un composant MgO et d'au moins un composant SiO₂,
dans lequel, le produit additif est inclus dans la masse de composant principal à élastifier.

2. Mélange selon la revendication 1, **caractérisé en ce que** le composant principal est la magnésie, de préférence de la magnésie frittée et/ou fondue, en particulier avec des teneurs en MgO comprises entre 85 et 99 % en poids
et/ou
de la dolomie magnésienne, en particulier avec des teneurs en MgO comprises entre 42 et 88 % en poids et des teneurs en CaO comprises entre 10 et 50 % en poids
et/ou
de la dolomie, en particulier avec des teneurs en MgO comprises entre 35 et 42 % en poids et des teneurs en CaO comprises entre 50 et 62 % en poids.

3. Mélange selon la revendication 1 ou 2, **caractérisé en ce que** le produit additif élastifiant constitué de minéral d'olivine et/ou en de minéral de forstérite et/ou d'un matériau de forstérite ou consiste en une dispersion qui, sous l'effet de la température, forme *in-situ* de la forstérite et/ou du matériau de forstérite, les matériaux de forstérite contenant de façon prépondérante (plus de 50 % en poids) de la forstérite.

4. Mélange selon la revendication 3, **caractérisé en ce que** la dispersion ou le matériau de forstérite contient
50 à 80, en particulier 60 à 70 % en poids de MgO
20 à 50, en particulier 30 à 40 % en poids de SiO₂
0 à 20, en particulier 1 à 5 % en poids de CaO.

5. Mélange selon la revendication 3 et/ou 4, **caractérisé en ce que** la dispersion ou le matériau de forstérite contient, en particulier en solution solide, pas plus de 5 % en poids de CaO, pas plus de 25 % en poids de MgO et pas plus de 7 % en poids de SiO₂ au-delà du rapport pondéral stoechiométrique de la forstérite.

6. Mélange selon la revendication 3, **caractérisé en ce que** la dispersion ou le matériau de forstérite contient
50 à 80, en particulier 60 à 70 % en poids de MgO
20 à 50, en particulier 30 à 40 % en poids de SiO₂
0 à 40, en particulier 1 à 10 % en poids de FeO et/ou de Fe₂O₃.

7. Mélange selon la revendication 3 et/ou 6, **caractérisé en ce que** la dispersion ou le matériau de forstérite contient, en particulier en solution solide, pas plus de 15 % en poids de FeO et/ou de Fe₂O₃, pas plus de 25 % en poids de MgO et pas plus de 7 % en poids de SiO₂ au-delà du rapport pondéral stoechiométrique de la forstérite.

8. Mélange selon une ou plusieurs des revendications 1 à 7, **caractérisé en ce que** le produit additif de forstérite et/ou le matériau de forstérite comportent des grains de périclase distribués et enfermés dans la matrice, lesquels présentent en particulier des tailles de grains comprises entre 30 et 900, de préférence entre 50 et 200 µm, en particulier en des quantités jusqu'à 25, de préférence de 3 à 15 % en poids.

9. Mélange selon une ou plusieurs des revendications 1 à 8, **caractérisé en ce que** le produit additif élastifiant est présent en des quantités de 3 à 30, en particulier de 10 à 20 % en poids, rapportés à la somme de l'élastifiant plus le composant principal.

10. Mélange selon une ou plusieurs des revendications 1 à 9, **caractérisé en ce que** le composant principal est présent avec la granulométrie suivante, de préférence en combinaison avec la granulométrie du produit additif, selon la granulométrie d'une courbe de Fuller typique :
1 à 8 mm : 20 à 50, en particulier 45 à 50 % en poids
0,25 à 1 mm : 10 à 30, en particulier 15 à 20 % en poids
<0,25 mm : 20 à 60, en particulier 23 à 30 % en poids.

11. Mélange selon une ou plusieurs des revendications 1 à 10, **caractérisé en ce que** les corps moulés sont des pellets ou des briquettes ou consistent en un granulé fragmenté à partir de corps pressés.

12. Mélange selon la revendication 11, **caractérisé en ce que** la dispersion comporte un liant.

13. Mélange selon une ou plusieurs des revendications 1 à 12, **caractérisé en ce que** le mélange contient un liant habituel en des quantités habituelles, comme du ciment, en particulier du ciment d'argile, du sulfonate de lignine, du silicate de métal alcalin, du phosphate ou du sulfate,

14. Mélange selon une ou plusieurs des revendications 1 à 12, **caractérisé en ce que** le mélange contient comme liant de la poix, de préférence en des quantités de 2 à 5 % en poids, ou de la résine synthétique, de préférence en des quantités de 3 à 4 % en poids.

15. Mélange selon une ou plusieurs des revendications 1 à 14, **caractérisé en ce que** le mélange contient du carbone, en particulier sous forme de graphite, en particulier en des quantités de 2 à 20 % en poids.

16. Mélange selon une ou plusieurs des revendications 1 à 15, **caractérisé en ce que** le mélange contient un produit additif élastifiant qui est produit par un mélange d'un composant de MgO en poudre fine, par exemple de la magnésie frittée ou de la magnésie fondue ou de la magnésie caustique avec une teneur en MgO de 90 à 100 % en poids, en particulier de 93 à 99 % en poids, ainsi qu'un composant de SiO₂ en poudre fine, par exemple de la poudre de quartz, de la stéatite ou de l'olivine avec une teneur en SiO₂ de 30 à 100, en particulier de 40 à 99 % en poids, en rapport molaire M₂S ou avec un excédant souhaité en MgO par rapport au M₂S, par mélangeage intime suivi d'une cuisson céramique du mélange à des températures comprises entre 1600 et 2300 °C, refroidissement et concassage du produit cuit.

17. Mélange selon la revendication 16, **caractérisé en ce que** le mélange à partir duquel est réalisé le produit additif élastifiant contient en plus un composant CaO finement divisé comme de la chaux vive et/ou de l'hydroxyde de calcium en des quantités jusqu'à 20 % en poids ou un composant FeO et/ou Fe₂O₃ en des quantités jusqu'à 40 % en poids.

18. Utilisation d'un mélange selon une ou plusieurs des revendications 1 à 17, **caractérisé en ce qu'**un produit réfractaire est fabriqué sous la forme d'un corps moulé de grand format pressé et le cas échéant conditionné thermiquement à des températures comprises entre 80 et 800 °C, par exemple sous la forme d'une brique.

19. Utilisation selon la revendication 18, **caractérisé en ce que** le corps moulé est cuit à des températures comprises entre 800 et 1800, en particulier entre 1400 et 1700 °C.
